(19) Europäisches Patentamt
European Patent Office
Office européen des brevets

(11) **EP 4 032 867 A1**

(12) **EUROPEAN PATENT APPLICATION**
published in accordance with Art. 153(4) EPC

(43) Date of publication:
27.07.2022 Bulletin 2022/30

(21) Application number: 20865098.6

(22) Date of filing: 14.09.2020

(51) International Patent Classification (IPC):
C03C 17/34 (2006.01)   B32B 17/06 (2006.01)
C03C 17/36 (2006.01)   C03C 27/06 (2006.01)
C03C 27/12 (2006.01)   E06B 3/663 (2006.01)
E06B 3/67 (2006.01)

(52) Cooperative Patent Classification (CPC):
B32B 17/06; C03C 17/34; C03C 17/36;
C03C 27/06; E06B 3/663; E06B 3/67

(86) International application number:
PCT/JP2020/034734

(87) International publication number:
WO 2021/054289 (25.03.2021 Gazette 2021/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.09.2019 JP 2019169555

(71) Applicant: NIPPON SHEET GLASS COMPANY,
LIMITED
Tokyo 108-6321 (JP)

(72) Inventors:
• YAMAMOTO, Toru
Tokyo 108-6321 (JP)
• TAGUCHI, Masafumi
Tokyo 108-6321 (JP)
• YABUTA, Takeshi
Tokyo 108-6321 (JP)

(74) Representative: Cabinet Beau de Loménie
158, rue de l'Université
75340 Paris Cedex 07 (FR)

(54) **GLASS SHEET HAVING LOW RADIATION LAMINATED FILM, AND GLASS PRODUCT**

(57) The present invention provides a glass sheet with a low-emissivity multilayer film having improved properties required for glass products. A glass sheet (10) with a low-emissivity multilayer film according to the present invention includes a glass sheet (1) and a low-emissivity multilayer film (2) supported by the glass sheet (1). The low-emissivity multilayer film (2) has a $ZrO_2$-containing layer (3) disposed on an outermost side of the low-emissivity multilayer film (2) and a transparent conductive layer (4) disposed between the glass sheet (1) and the $ZrO_2$-containing layer (3). A content of $ZrO_2$ in the $ZrO_2$-containing layer (3) is 8 mol% or more and 100 mol% or less. A content of $SiO_2$ in the $ZrO_2$-containing layer (3) is 0 mol% or more and 92 mol% or less. An arithmetic average roughness Ra of a surface (3a) of the $ZrO_2$-containing layer (3) is 12 nm or less, and is smaller than an arithmetic average roughness Ra of a surface (4a) of the transparent conductive layer (4).

FIG.1

**Description**

TECHNICAL FIELD

The present invention relates to a glass sheet with a low-emissivity multilayer film and a glass product.

BACKGROUND ART

Glass sheets are required to have thermal insulation properties depending on their intended uses. The thermal insulation properties of the glass sheets can be improved for example by forming a low-emissivity (Low-E) film on their surfaces. The low-emissivity film typically includes a transparent conductive layer, and in some cases further includes a $SiO_2$ layer disposed on the transparent conductive layer (for example, Patent Literatures 1 and 2).
The $SiO_2$ layer can be manufactured for example by hydrolyzing and polycondensing a hydrolyzable silicon compound such as silicon alkoxide by a so-called sol-gel method. The $SiO_2$ layer can also be manufactured for example by applying a mixture of an aqueous solution of sodium silicate and/or potassium silicate and an aqueous solution of lithium silicate onto a glass sheet, drying and further heating a resultant coating film.

CITATION LIST

Patent Literature

  Patent Literature 1: WO 2006/098285
  Patent Literature 2: JP 2014-514997 A

SUMMARY OF INVENTION

Technical Problem

However, conventional sheets with a low-emissivity film have room for improvement in properties required for glass products such as durability, scratch resistance, and surface antifouling properties.
In view of this, the present invention aims to provide a glass sheet with a low-emissivity multilayer film having improved properties required for glass products.

Solution to Problem

As a result of intensive studies, the present inventors found that the arithmetic average roughness of a surface of a low-emissivity film has an influence on the scratch resistance and the surface antifouling properties. The present inventors proceeded with the studies based on this finding thus to complete the present invention.
The present invention provides a glass sheet with a low-emissivity multilayer film including:

  a glass sheet; and
  a low-emissivity multilayer film supported by the glass sheet, wherein
  the low-emissivity multilayer film has:

    a $ZrO_2$-containing layer disposed on an outermost side of the low-emissivity multilayer film; and
    a transparent conductive layer disposed between the glass sheet and the $ZrO_2$-containing layer,
    a content of $ZrO_2$ in the $ZrO_2$-containing layer is 8 mol% or more and 100 mol% or less,
    a content of $SiO_2$ in the $ZrO_2$-containing layer is 0 mol% or more and 92 mol% or less, and
    an arithmetic average roughness Ra of a surface of the $ZrO_2$-containing layer is 12 nm or less, and is smaller than an arithmetic average roughness Ra of a surface of the transparent conductive layer.

Advantageous Effects of Invention

According to the present invention, it is possible to provide a glass sheet with a low-emissivity multilayer film having improved properties required for glass products.

BRIEF DESCRIPTION OF DRAWINGS

FIG. 1 is a schematic cross-sectional view of a glass sheet with a low-emissivity multilayer film according to an embodiment of the present invention.

FIG. 2 is an enlarged cross-sectional view showing the vicinity of a surface of a transparent conductive layer of the glass sheet with a low-emissivity multilayer film.

FIG. 3 is a schematic cross-sectional view showing an example of a glass product.

FIG. 4A is a diagram for describing a temperature distribution of a conventional glass product placed in an environment where the exterior temperature is lower than the interior temperature.

FIG. 4B is a diagram for describing a temperature distribution of the glass product in FIG. 3 placed in an environment where the exterior temperature is lower than the interior temperature.

FIG. 5 is a schematic cross-sectional view showing a glass product of Modification 1.

FIG. 6 is a schematic cross-sectional view showing a glass product of Modification 2.

FIG. 7 is a schematic cross-sectional view showing a glass product of Modification 3.

FIG. 8 is a schematic cross-sectional view showing a glass product of Modification 4.

FIG. 9 shows a state in which the glass product is used as a skylight of a transportation vehicle.

DESCRIPTION OF EMBODIMENTS

The present invention will be described in detail below, but the following description is not intended to limit the present invention to a particular embodiment.

<Embodiment of glass sheet with low-emissivity multilayer film>

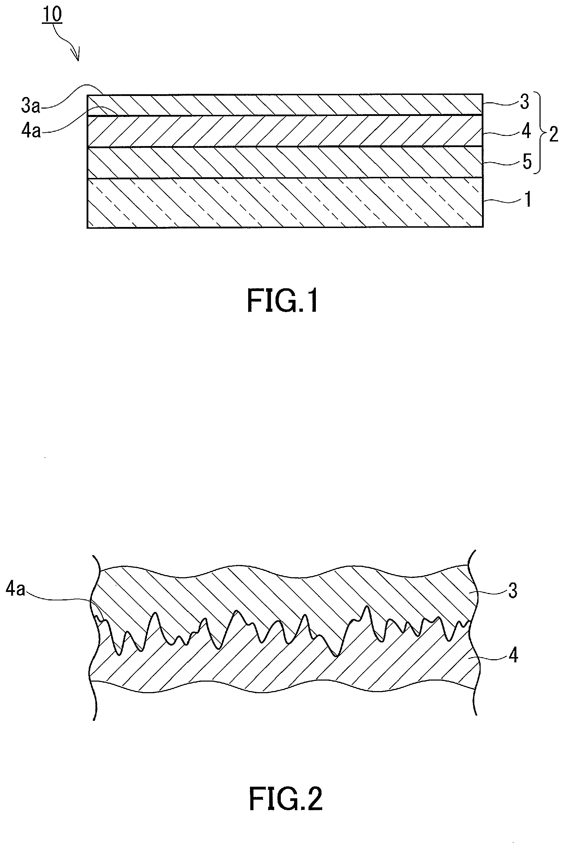

As shown in FIG. 1, a glass sheet 10 with a low-emissivity multilayer film of the present embodiment includes a glass sheet 1 and a low-emissivity multilayer film 2. The low-emissivity multilayer film 2 is supported by the glass sheet 1. The low-emissivity multilayer film 2 is for example in contact with the glass sheet 1 to cover a principal surface (a surface having the largest area) of the glass sheet 1. The low-emissivity multilayer film 2 is for example adjacent to an external atmosphere (typically, air).

The low-emissivity multilayer film 2 has a layer containing $ZrO_2$ (a $ZrO_2$-containing layer 3) and a transparent conductive layer 4. The $ZrO_2$-containing layer 3 is disposed on the outermost side of the low-emissivity multilayer film 2, and is adjacent to the external atmosphere. The transparent conductive layer 4 is disposed between the glass sheet 1 and the $ZrO_2$-containing layer 3, and is for example in contact with the $ZrO_2$-containing layer 3. The transparent conductive layer 4 may or may not be in contact with the glass sheet 1.

In the glass sheet 10 with a low-emissivity multilayer film of the present embodiment, the arithmetic average roughness Ra of a surface of the $ZrO_2$-containing layer 3 (a surface 3a closer to the external atmosphere) is 12 nm or less, and is smaller than the arithmetic average roughness Ra of a surface of the transparent conductive layer 4 (a surface 4a closer to the $ZrO_2$-containing layer 3). The arithmetic average roughness Ra of the surface 3a is preferably 10 nm or less, more preferably 8 nm or less, and particularly preferably 6 nm or less. The lower limit value of the arithmetic average roughness Ra of the surface 3a is not particularly limited, and is for example 1 nm. The arithmetic average roughness Ra of the surface 3a can be determined by a method in accordance with the specifications of JIS B0601: 2013.

In the glass sheet 10 with a low-emissivity multilayer film, the arithmetic average roughness Ra of the surface 4a of the transparent conductive layer 4 is not particularly limited as long as it is larger than the arithmetic average roughness Ra of the surface 3a of the $ZrO_2$-containing layer 3. The arithmetic average roughness Ra of the surface 4a is for example 14 nm or more. The upper limit value of the arithmetic average roughness Ra of the surface 4a is not particularly limited, and may be 50 nm or 25 nm. The arithmetic average roughness Ra of the surface 4a can be determined for example by the following method. First, a cross-section of the glass sheet 10 with a low-emissivity multilayer film is observed with a scanning electron microscope (SEM). FIG. 2 shows an example of an electron microscope image, obtained by the SEM observation, of the vicinity of the surface 4a of the transparent conductive layer 4. From the obtained electron microscope image, the roughness profile of the surface 4a is determined. From the obtained roughness profile, the arithmetic average roughness Ra of the surface 4a can be determined by a calculation method specified in JIS B0601: 2013. Note that the arithmetic average roughness Ra of the surface 4a may be determined by a method in accordance with the specification of JIS B0601: 2013 in a state where the $ZrO_2$-containing layer 3 is not formed (the surface 4a of the transparent conductive layer 4 is exposed outside). In addition, the surface 4a of the transparent conductive layer 4 may not be completely covered with the $ZrO_2$-containing layer 3 thus to be partially exposed outside. In this case, from the viewpoint of sufficiently achieving the effect of the present invention, it is preferable that the surface

3a of the $ZrO_2$-containing layer 3 and the part of the surface 4a of the transparent conductive layer 4, which is exposed outside, each should have an arithmetic average roughness Ra of 12 nm or less.

(Glass sheet)

The glass sheet 1 may be a float glass sheet or a figured glass sheet. The surface of the float glass sheet has an excellent smoothness. The arithmetic average roughness Ra of the surface of the float glass sheet is preferably 1 nm or less, and more preferably 0.5 nm or less.

The surface of a figured glass sheet has macroscopic asperities that are large enough to be observed with the naked eye. The macroscopic asperities refer to asperities for which the mean spacing RSm is on the order of millimeters. The mean spacing RSm refers to the average value of lengths of peak-valley periods in the roughness profile that are calculated based on points at which the roughness profile intersects the mean line. The macroscopic asperities can be observed by setting an evaluation length on the order of centimeters in the roughness profile. The mean spacing RSm of the asperities on the surface of the figured glass sheet may be 0.3 mm or more, 0.4 mm or more, or 0.45 mm or more. The mean spacing RSm may be 2.5 mm or less, 2.1 mm or less, 2.0 mm or less, or 1.5 mm or less. The asperities on the surface of the figured glass sheet preferably have, together with the mean spacing RSm in the above range, a maximum height Rz of 0.5 $\mu$m to 10 $\mu$m, and particularly 1 $\mu$m to 8 $\mu$m. The mean spacing RSm and the maximum height Rz are values specified in JIS B0601: 2013. Even a figured glass sheet sometimes has an arithmetic average roughness Ra of several nm or less (for example, 1 nm or less) for example in a surface roughness measurement in which the evaluation length in the roughness profile is several hundreds of nm. That is, the surface of the figured glass sheet sometimes has a microscopically excellent smoothness. The surface roughness measurement in which the evaluation length is several hundreds of nm is for example atomic force microscope (AFM) observation.

The composition of the glass sheet 1 may be the same as those of conventional figured glass sheets, architectural glass sheets, automobile glass sheets, and the like. The content of iron oxide in the glass sheet 1 may be 0.06 wt% or less, or 0.02 wt% or less, in terms of $Fe_2O_3$ content. Iron oxide is a typical coloring component. In the case where the glass sheet 1 is a colored glass, the content of iron oxide in the glass sheet 1 may be 0.3 wt% or more and 1.5 wt% or less.

The thickness of the glass sheet 1 is not particularly limited, and is for example 0.5 mm to 15 mm.

($ZrO_2$-containing layer)

The $ZrO_2$-containing layer 3 contains $ZrO_2$, and its content is 8 mol% or more and 100 mol% or less. The lower limit value of the content of $ZrO_2$ in the $ZrO_2$-containing layer is preferably 10 mol%. The upper limit value of the content of $ZrO_2$ is preferably 80 mol%, more preferably 60 mol%, and still more preferably 30 mol%. The content of $ZrO_2$ may be 23 mol% or more and 100 mol% or less, or may be 23 mol% or more and 72 mol% or less. In some cases, the content of $ZrO_2$ may be 10 mol% or more and 30 mol% or less, or 20 mol% or more and 30 mol% or less. There is a tendency that the higher the content of $ZrO_2$ in the $ZrO_2$-containing layer 3 is, the more the alkali resistance of the $ZrO_2$-containing layer 3 is improved. On the other hand, an excessively high content of $ZrO_2$ improves the refractive index of the $ZrO_2$-containing layer 3 thus to sometimes excessively increase the visible light reflectance.

The $ZrO_2$-containing layer 3 may further contain $SiO_2$ as a component other than $ZrO_2$. The content of $SiO_2$ in the $ZrO_2$-containing layer 3 is 0 mol% or more and 92 mol% or less, and is preferably 0 mol% or more and 77 mol% or less, and more preferably 28 mol% or more and 77 mol% or less.

The physical thickness of the $ZrO_2$-containing layer 3 is for example 15 nm or more and 150 nm or less, may be 20 nm or more, or 30 nm or more, and is preferably 30 nm or more and 150 nm or less, and more preferably 50 nm or more and 120 nm or less. The $ZrO_2$-containing layer 3 having such a physical thickness is suitable for reducing a variation in reflected color which is caused by disposing the $ZrO_2$-containing layer 3 on a laminate including the transparent conductive layer 4 and the glass sheet 1 (a glass sheet with a transparent conductive layer).

(Transparent conductive layer)

A first example of the transparent conductive layer 4 is a layer consisting substantially of fluorine-containing tin oxide and having a thickness of 200 nm or more and 400 nm or less. In the present description, the phrase "consist substantially of" means that the content of a component in a layer is 90 mol% or more, even 95 mol% or more, and particularly 99 mol% or more. The transparent conductive layer 4 of the first example preferably has a thickness of 300 nm or more and 400 nm or less. In the case where the transparent conductive layer 4 of the first example is used, an underlayer 5 described later preferably has a double layer structure (for example, the underlayer 5 of a second example). In the case where the low-emissivity multilayer film 2 includes the transparent conductive layer 4 of the first example, the $ZrO_2$-containing layer 3 preferably has a physical thickness of 10 nm or more and 100 nm or less.

A second example of the transparent conductive layer 4 is a layer consisting substantially of fluorine-containing tin oxide and having a thickness of 400 nm or more and 800 nm or less. The transparent conductive layer 4 of the second example preferably has a thickness of 500 nm or more and 700 nm or less. In the case where the transparent conductive layer 4 of the second example is used, the underlayer 5 described later preferably has a double layer structure (for example, the underlayer 5 of the second example). In the case where the low-emissivity multilayer film 2 includes the transparent conductive layer 4 of the second example, the $ZrO_2$-containing layer 3 preferably has a physical thickness of 40 nm or more and 250 nm or less.

A third example of the transparent conductive layer 4 is a transparent conductive layer including: a first transparent conductive layer consisting substantially of antimony-containing tin oxide and having a thickness of 100 nm or more and 300 nm or less; and a second transparent conductive layer consisting substantially of fluorine-containing tin oxide and having a thickness of 150 nm or more and 400 nm or less. The transparent conductive layer 4 of the third example may include the first transparent conductive layer and the second transparent conductive layer. In the third example, the first transparent conductive layer and the second transparent conductive layer are for example layered in this order from the principal surface side of the glass sheet 1. In the transparent conductive layer 4 of the third example, the first transparent conductive layer preferably has a thickness of 150 nm or more and 200 nm or less. In the transparent conductive layer 4 of the third example, the second transparent conductive layer preferably has a thickness of 200 nm or more and 300 nm or less. In the case where the transparent conductive layer 4 of the third example is used, the underlayer 5 described later preferably has a double layer structure (for example, the underlayer 5 of the second example). In the case where the low-emissivity multilayer film 2 includes the transparent conductive layer 4 of the third example, the $ZrO_2$-containing layer 3 preferably has a physical thickness of 10 nm or more and 100 nm or less.

(Underlayer)

The low-emissivity multilayer film 2 may further include an underlayer 5. The underlayer 5 is for example disposed between the glass sheet 1 and the transparent conductive layer 4, and may be in direct contact with each of the glass sheet 1 and the transparent conductive layer 4.

A first example of the underlayer 5 is a layer containing silicon oxycarbide (SiOC) as a main component and having a thickness of 20 nm or more and 120 nm or less. In the present description, the term "main component" refers to a component whose content on the molar basis is the highest. The underlayer 5 of the first example may consist substantially of silicon oxycarbide. The underlayer 5 of the first example preferably has a thickness of 30 nm or more and 100 nm or less, and more preferably has a thickness of 30 nm or more and 60 nm or less.

The second example of the underlayer 5 is an underlayer including: a first underlayer consisting substantially of tin oxide and having a thickness of 10 nm or more and 90 nm or less; and a second underlayer consisting substantially of $SiO_2$ and having a thickness of 10 nm or more and 90 nm or less. In the second example, the first underlayer and the second underlayer are for example layered in this order from the principal surface side of the glass sheet 1. In the underlayer 5 of the second example, the first underlayer preferably has a thickness of 10 nm or more and 70 nm or less, and more preferably has a thickness of 12 nm or more and 40 nm or less. In the underlayer 5 of the second example, the second underlayer preferably has a thickness of 10 nm or more and 70 nm or less, and more preferably has a thickness of 12 nm or more and 40 nm or less.

A third example of the underlayer 5 is an underlayer including: the first underlayer consisting substantially of $SiO_2$ and having a thickness of 10 nm or more and 30 nm or less; the second underlayer consisting substantially of tin oxide and having a thickness of 10 nm or more and 90 nm or less; and a third underlayer consisting substantially of $SiO_2$ and having a thickness of 10 nm or more and 90 nm or less. In the third example, the first underlayer, the second underlayer, and the third underlayer are for example layered in this order from the principal surface side of the glass sheet 1. In the underlayer 5 of the third example, the first underlayer preferably has a thickness of 10 nm or more and 20 nm or less. In the underlayer 5 of the third example, the second underlayer preferably has a thickness of 10 nm or more and 70 nm or less, and more preferably has a thickness of 12 nm or more and 40 nm or less. In the underlayer 5 of the third example, the third underlayer preferably has a thickness of 10 nm or more and 70 nm or less, and more preferably has a thickness of 12 nm or more and 40 nm or less.

(Another low-emissivity film)

The glass sheet 10 with a low-emissivity multilayer film of the present embodiment may further include another low-emissivity film disposed on a surface of the glass sheet 1 opposite from the surface of the glass sheet 1 closer to the low-emissivity multilayer film 2. The other low-emissivity film is for example a film including a laminate in which a dielectric layer, a layer containing Ag as a main component, and another dielectric layer are layered in this order.

(Method for manufacturing glass sheet with low-emissivity multilayer film)

The glass sheet 10 with a low-emissivity multilayer film of the present embodiment can be prepared for example by forming the $ZrO_2$-containing layer 3 on the transparent conductive layer 4 of the laminate (glass sheet with a transparent conductive layer), which includes the transparent conductive layer 4 and the glass sheet 1. The glass sheet with a transparent conductive layer may be a commercially available one. The $ZrO_2$-containing layer 3 can be prepared for example by the following method. First, a coating liquid for forming the $ZrO_2$-containing layer 3 is applied onto the transparent conductive layer 4 to prepare a liquid film.

The coating liquid for example contains a $ZrO_2$ precursor and an organic solvent. The $ZrO_2$ precursor for example contains at least one selected from the group consisting of zirconium oxychloride and zirconium oxynitrate, and preferably contains zirconium oxynitrate.

The organic solvent contained in the coating liquid is not particularly limited as long as it can dissolve the $ZrO_2$ precursor or can be uniformly mixed with an aqueous solution of the $ZrO_2$ precursor. The organic solvent preferably contains an alcohol having 1 to 5 carbon atoms. The number of hydroxy groups contained in this alcohol is for example 1 to 3. This alcohol may be a primary alcohol or a secondary alcohol. This alcohol may further contain a functional group other than a hydroxy group (for example, an ether group). Examples of the alcohol having 1 to 5 carbon atoms include methanol, ethanol, propanol, butanol, propylene glycol, propylene glycol monomethyl ether (PGME) and 3-methoxy-1-butanol. The organic solvent may contain an alcohol other than the alcohol having 1 to 5 carbon atoms.

The coating liquid may further contain silicon alkoxide and/or a hydrolysate thereof. Silicon alkoxide is represented for example by a general formula $Si(OR)_nX_{4-n}$, where n is an integer of 1 to 4, and is preferably an integer of 2 to 4. OR is independently an alkoxy group having 1 to 4 carbon atoms. Examples of the alkoxy group having 1 to 4 carbon atoms include a methoxy group, an ethoxy group, a propoxy group, and a butoxy group. X represents a non-hydrolyzable functional group. X may be independently a hydrocarbon group having 1 to 6 carbon atoms. Examples of the hydrocarbon group having 1 to 6 carbon atoms include a methyl group, an ethyl group, a propyl group, an isopropyl group, a butyl group, a pentyl group, and a phenyl group. Examples of silicon alkoxide include tetramethoxysilane, tetraethoxysilane, tetraisopropoxysilane, methyltrimethoxysilane, methyltriethoxysilane, dimethyldiethoxysilane, diethyldiethoxysilane, and phenyltriethoxysilane.

In the case where the coating liquid contains silicon alkoxide, the coating liquid preferably further contains water and a catalyst. The amount of water in the coating liquid is preferably 1 to 40 equivalents, more preferably 1 to 10 equivalents, and still more preferably 2 to 5 equivalents with respect to the number of moles of water necessary for hydrolysis of silicon alkoxide.

The catalyst is not particularly limited as long as it functions as a hydrolysis catalyst. The hydrolysis catalyst may be a base, and is preferably an acid. The acid may be an inorganic acid or an organic acid. The boiling point of the acid is preferably 300°C or less. Examples of the acid include a hydrochloric acid and a nitric acid. The content of the acid in the coating liquid is for example 0.001 wt% to 0.3 wt%, and is preferably 0.001 wt% to 0.03 wt%, and more preferably 0.002 wt% to 0.02 wt%.

The solids concentration of the coating liquid is for example 0.1 wt% to 7 wt%, preferably 6 wt% or less, more preferably 5 wt% or less, even more preferably 4 wt% or less, and particularly preferably 3 wt% or less. The lower limit value of the solids concentration of the coating liquid is for example 0.5 wt%.

The method for applying the coating liquid onto the glass sheet with a transparent conductive layer is not particularly limited, and examples thereof include spray coating, flow coating, roll coating, spin coating, slot die coating, and a bar coating.

The thickness of the liquid film obtained by applying the coating liquid onto the glass sheet with a transparent conductive layer is not particularly limited, and is for example several $\mu$m to several tens of $\mu$m.

Next, the liquid film is dried and then baked to obtain the $ZrO_2$-containing layer 3. The drying step is performed by heating the liquid film at a temperature of for example 100°C or more and 500°C or less for a period of 2 seconds or more and 10 minutes or less. In the baking step, the maximum temperature the glass sheet with a transparent conductive layer reaches is for example 800°C or less. In the baking step, the period for which the temperature of the glass sheet with a transparent conductive layer is 400°C or more is preferably 2 seconds or more. The baking step may serve as the drying step. Furthermore, the baking step may serve as a step of heating and molding the glass sheet 1 or a step of heating the glass sheet 1 for thermal tempering.

The drying step and the baking step may be performed for example by hot air drying. The drying step and the baking step may be performed by holding the glass sheet with a transparent conductive layer on which the liquid film has been prepared, in a heating furnace set at a predetermined temperature for a predetermined period.

The method for manufacturing the glass sheet 10 with a low-emissivity multilayer film is not limited to the above method. For example, the glass sheet 10 with a low-emissivity multilayer film can also be prepared by providing the $ZrO_2$-containing layer 3 on the glass sheet with a transparent conductive layer by an on-line CVD method.

(Properties of glass sheet with low-emissivity multilayer film)

In the glass sheet 10 with a low-emissivity multilayer film of the present embodiment, the arithmetic average roughness Ra of the surface 3a of the $ZrO_2$-containing layer 3 is 12 nm or less. Such a surface 3a is less likely to be scratched even when rubbed against a solid and thus is excellent in scratch resistance. Furthermore, an oil content such as a fingerprint is less likely to be put on the surface 3a, and thus the surface 3a is excellent also in surface antifouling properties. The glass sheet 10 with a low-emissivity multilayer film of the present embodiment is excellent also in thermal insulation properties.

Furthermore, the glass sheet 10 with a low-emissivity multilayer film is excellent in durability, particularly alkali resistance. The alkali resistance can be evaluated for example by the following method. First, a durability test is performed on the glass sheet 10 with a low-emissivity multilayer film. In the durability test, prepared is an aqueous sodium hydroxide solution having a concentration of 1 N (1 mol/L) and a temperature of 23°C. The glass sheet 10 with a low-emissivity multilayer film is immersed in this aqueous sodium hydroxide solution for 24 hours to perform the durability test. Then, the $L_1^*$ value, the $a_1^*$ value, and the $b_1^*$ value of reflected light from the $ZrO_2$-containing layer 3 in the glass sheet 10 with a low-emissivity multilayer film after the durability test are measured with a spectrophotometer. The $L_1^*$ value, the $a_1^*$ value, and the $b_1^*$ value are based on the $L^*a^*b^*$ color system (CIE1976). Based on the obtained $L_1^*$ value, $a_1^*$ value, and $b_1^*$ value and the $L_0$ value, the $a_0^*$ value, and the $b_0^*$ value of reflected light from the $ZrO_2$-containing layer 3 in the glass sheet 10 with a low-emissivity multilayer film before the durability test, the color change $\Delta E^*$ of the reflected light is calculated for evaluation of the alkali resistance. $\Delta E^*$ can be calculated by Equations (1) to (4) below.

$$\Delta L^* = L_0^* - L_1^* \quad (1)$$

$$\Delta a^* = a_0^* - a_1^* \quad (2)$$

$$\Delta b^* = b_0^* - b_1^* \quad (3)$$

$$\Delta E^* = \{(\Delta L^*)^2 + (\Delta a^*)^2 + (\Delta b^*)^2\}^{1/2} \quad (4)$$

In the glass sheet 10 with a low-emissivity multilayer film, $\Delta E^*$ calculated from the above test results is for example 5 or less, and is preferably 4 or less, more preferably 3 or less, still more preferably 2 or less, particularly preferably 1.5 or less, and more particularly preferably 1 or less, and may be 0.5 or less in some cases. The lower limit value of $\Delta E^*$ is not particularly limited, and is for example 0.05.

The visible light reflectance of the glass sheet 10 with a low-emissivity multilayer film is not particularly limited, and is for example 15% or less, and is preferably 10% or less, more preferably 8% or less, and still more preferably 7% or less. The lower limit value of the visible light reflectance of the glass sheet 10 with a low-emissivity multilayer film is for example 1%. In the present description, the visible light reflectance is a value determined in accordance with the provisions of JIS R3106: 1998, and its specific measurement conditions will be described in EXAMPLES.

<Embodiments of glass product>

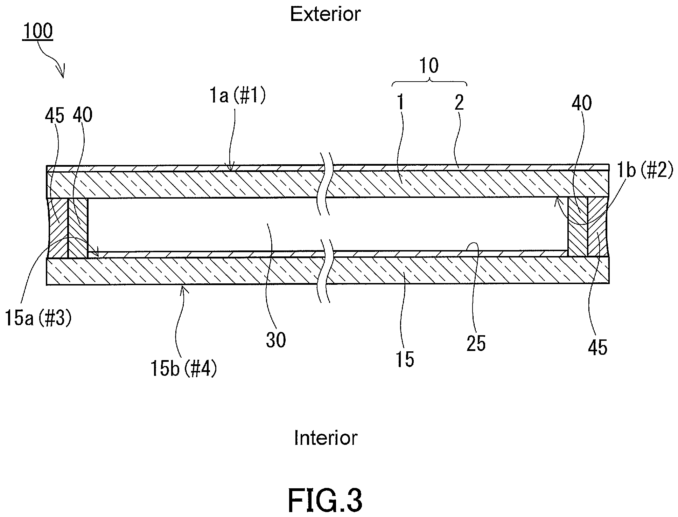

FIG. 3 shows an example of a glass product 100 used as a skylight of a building. The glass product 100 includes the glass sheet 10 with a low-emissivity multilayer film and a second glass sheet 15 facing the glass sheet 10 with a low-emissivity multilayer film across a gap layer 30. In the present description, as opposed to the second glass sheet 15 included in the glass product, the glass sheet 1 of the glass sheet 10 with a low-emissivity multilayer film is referred to also as "first glass sheet". The glass product 100 may further include a low-emissivity film 25 (a first low-emissivity film) that is supported by the second glass sheet 15 and is adjacent to the gap layer 30. The glass product 100 in FIG. 3 is a multiple-glazed glass unit.

The glass product 100 is incorporated into a window structure of a building, as a single glass unit or as a window assembly including a window frame (sash) section, to separate an interior space and an exterior space. The glass sheet 10 with a low-emissivity multilayer film is positioned closest to the exterior space, and the low-emissivity multilayer film 2 is adjacent to the exterior space. The second glass sheet 15 is positioned closest to the interior space and is adjacent to the interior space.

In the field of a multiple-glazed glass unit, it is conventional to assign numbers to principal surfaces of a glass sheet included in the unit as a first face, a second face, a third face, ... in order from the one facing the exterior space.

When this convention is applied to the glass product 100 shown in FIG. 3, a principal surface 1a of the first glass sheet 1 facing away from the gap layer 30 (the principal surface closer to the exterior space) is the first face (face #1), a principal surface 1b of the first glass sheet 1 facing toward the gap layer 30 is the second face (face #2), a principal surface 15a of the second glass sheet 15 facing toward the gap layer 30 is the third face (face #3), and a principal surface 15b of the second glass sheet 15 facing away from the gap layer 30 (the principal surface closer to the interior space) is the fourth face (face #4). In the glass product 100, the low-emissivity multilayer film 2 is formed on the face #1, and the low-emissivity film 25 is formed on the face #3.

In the glass product 100, the second glass sheet 15 can employ that described above for the first glass sheet 1, and may be the same as the first glass sheet 1.

The low-emissivity film 25 is not particularly limited, and a known low-emissivity film may be used. An example of the low-emissivity film 25 is a film including a metal layer such as a Ag layer. This film for example has a structure in which a dielectric layer, a metal layer, a sacrificial layer, and a dielectric layer are layered in this order from the principal surface of the second glass sheet 15 on which the film is formed (first multilayer structure). The low-emissivity film 25 may have two or more metal layers. The low-emissivity film 25 having two or more metal layers is suitable for reducing the U value (heat transmission coefficient). The low-emissivity film 25 having two or more metal layers for example has a structure in which a dielectric layer, a metal layer, a sacrificial layer, a dielectric layer, a metal layer, a sacrificial layer, and a dielectric layer are layered in this order from the principal surface of the second glass sheet 15 on which the film is formed (second multilayer structure). In the second multilayer structure, two first multilayer structures share the dielectric layer sandwiched between one sacrificial layer and one metal layer. In this manner, the low-emissivity film 25 may have two or more first multilayer structures.

Each of the dielectric layer, the metal layer, and the sacrificial layer may be a single layer formed from one material, or may be a laminate of two or more layers formed from different materials.

In the first multilayer structure, the dielectric layers paired with each other to sandwich the metal layer and sacrificial layer may be formed from the same material, or may be formed from different materials.

When the number of the metal layers included in the low-emissivity film 25 is denoted by n, the number of the dielectric layers sandwiching the metal layers is n + 1 or more. Accordingly, the low-emissivity film 25, which includes the metal layer, is typically composed of 2n + 1 or more layers.

The metal layer is for example a Ag layer. The Ag layer is a layer containing Ag as a main component, and may be a layer consisting substantially of Ag. The metal layer may include a material obtained by doping Ag with a metal such as palladium, gold, indium, zinc, tin, aluminum, or copper. The low-emissivity film 25 may have one Ag layer, or may have two Ag layers or three or more Ag layers.

The total thickness of the metal layers included in the low-emissivity film 25 is for example 18 to 34 nm, and is preferably 22 to 29 nm.

The sacrificial layer is for example a layer containing, as a main component, at least one selected from titanium, zinc, nickel, chromium, zinc/an aluminum alloy, niobium, a stainless steel, an alloy thereof, and an oxide thereof. The sacrificial layer is preferably a layer containing, as a main component, at least one selected from titanium, titanium oxide, zinc, and zinc oxide. The thickness of the sacrificial layer is for example 0.1 to 5 nm, and is preferably 0.5 to 3 nm.

The dielectric layer is for example a layer containing an oxide or a nitride as a main component. A more specific example of such a dielectric layer is a layer containing, as a main component, at least one selected from respective oxides and respective nitrides of silicon, aluminum, zinc, tin, titanium, indium, and niobium. The thickness of the dielectric layer is for example 8 to 120 nm, and is preferably 15 to 85 nm.

The methods of forming the metal layer, the sacrificial layer, and the dielectric layer are not particularly limited, and known thin film forming methods are employable. For example, these layers can be formed by a sputtering method. The dielectric layer composed of an oxide or a nitride can be formed for example by reactive sputtering, which is a type of sputtering method. The sacrificial layer is a layer necessary for forming the dielectric layer on the metal layer by reactive sputtering (a layer that per se oxidizes to prevent oxidation of the metal layer during the reactive sputtering). The designation "sacrificial layer" is well known to those skilled in the art.

The glass product 100 may further include a second low-emissivity film (not shown) that is supported by the second glass sheet 15 and is adjacent to the interior space. The second low-emissivity film can employ that described above for the low-emissivity multilayer film 2, and may be the same as the low-emissivity multilayer film 2.

The thickness of the gap layer 30 is maintained by a spacer 40 disposed on a peripheral edge portion (a peripheral edge portion of the principal surfaces facing the gap layer 30) of the pair of glass sheets (the first and second glass sheets 1 and 15) sandwiching the gap layer 30 therebetween. The space inside the gap layer 30 is hermetically sealed by a sealing material 45 disposed around the outer periphery of the spacer 40. Between the spacer 40 and each of the glass sheets 1 and 15, an additional sealing material may be disposed. To the spacer 40 and the sealing material 45, known structures are applicable. In the gap layer 30, for example, air (dry air) or an inert gas such as argon or krypton is introduced and filled. From the viewpoint of designing the U value of the glass product 100 to be lower, the gas filled in the gap layer 30 is preferably argon or krypton, and is more preferably krypton. In the present description, the gap layer 30 filled with air is referred to also as "air layer". The inside of the gap layer 30 may be depressurized, and may be under vacuum (at a pressure of approximately 10 Pa or less).

The thickness of the gap layer 30 is for example 4 to 16 mm, and is preferably 6 to 16 mm. In the case where the inside of the gap layer 30 is in a depressurized state or a vacuum state, the thickness of the gap layer 30 may be 0.3 to 1 mm.

The thickness of the glass product 100 is for example 10 to 22 mm, and may be 12 to 22 mm. In the case where the inside of the gap layer 30 is in a depressurized state or a vacuum state, the thickness of the glass product 100 may be 5 to 15 mm.

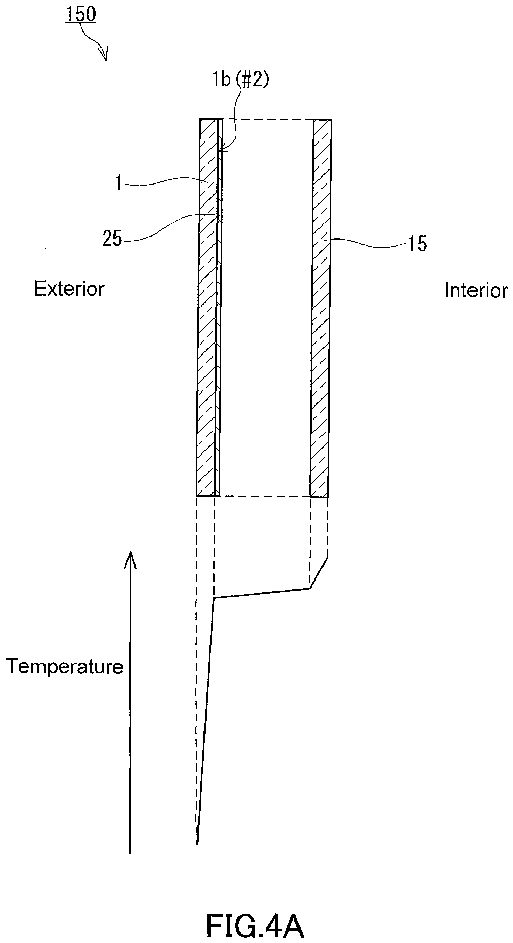

In the glass product 100, since the low-emissivity multilayer film 2 is formed on the face #1, a temperature decrease of the face #1 can be reduced even when the exterior temperature is lower than the interior temperature. For example, a glass product having a low-emissivity film formed on the face #2 is conventionally known. In a glass product 150 in FIG. 4A, the low-emissivity multilayer film 2 is not formed on the face #1, and the low-emissivity film 25 is formed on the face #2 instead of on the face #3. Except for the above, the structure of the glass product 150 is the same as that of the glass product 100. In FIG. 4A, the structures of the spacer 40 and the sealing material 45 are omitted. In the case where the glass product 150 is placed in an environment in which solar radiation is insufficiently incident on the glass product 150 and the exterior temperature is lower than the interior temperature, for example in an environment in the early morning, heat (far-infrared ray) moves from the interior toward the exterior in the glass product 150. The low-emissivity film 25 of the glass product 150 reflects this heat back to the interior. This insufficiently supplies heat to the first glass sheet 1 positioned closer to the exterior, decreasing the temperature of the face #1. When the temperature of the face #1 decreases to the dew point of the exterior air or lower, dew condensation (for example, morning dew) occurs.

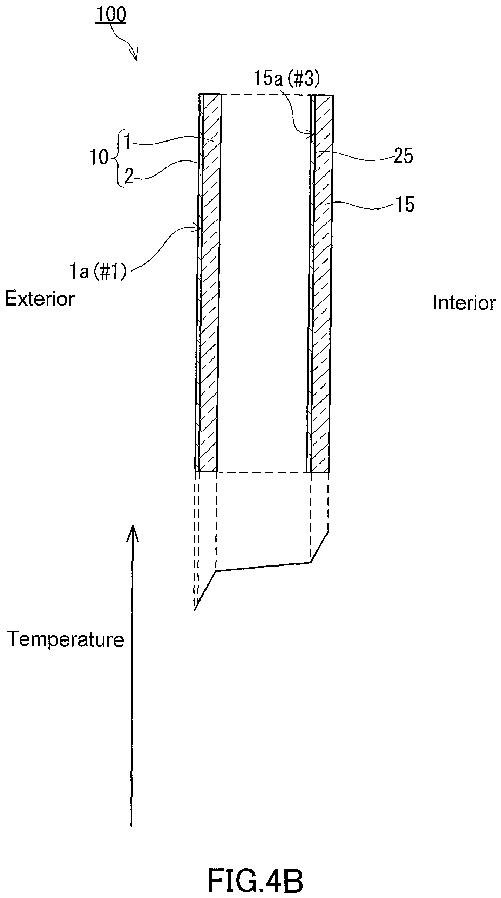

In contrast, as shown in FIG. 4B, in the glass product 100, heat from the interior side is reflected from the low-emissivity multilayer film 2 after moving inside the first glass sheet 1. The heat, which has been reflected from the low-emissivity multilayer film 2, moves again inside the first glass sheet 1 and is returned to the interior. This sufficiently supplies heat from the interior to the first glass sheet 1, reducing a temperature decrease of the face #1. The reduction of the temperature decrease of the face #1 reduces a temperature decrease of the low-emissivity multilayer film 2 formed on the face #1 accordingly. In the glass product 100, a temperature decrease of the surface of the low-emissivity multilayer film 2, which is closer to the exterior, to the dew point of the exterior air or lower is reduced, and accordingly dew condensation on the surface tends to be reduced. The reduction of the dew condensation allows to maintain visibility through the glass product 100 in a favorable state.

The glass product 100 may be used for a window structure other than a skylight of a building, and may be used for a window structure of a transportation vehicle described later.

<Modification 1 of glass product>

The intended use of the glass product including the glass sheet 10 with a low-emissivity multilayer film of the present invention is not limited to a skylight of a building. In Modification 1, the glass product is used as a common window provided in a wall of a building or the like. Specifically, the glass product of Modification 1 is incorporated into a window structure of a building to separate an interior space and an exterior space.

In the glass product of Modification 1, the glass sheet 10 with a low-emissivity multilayer film may be used alone. In this case, the structure of the glass product is for example the same as that of a glass product 300 of Modification 4 described later. This glass product is preferably used such that the low-emissivity multilayer film 2 is positioned closer to the interior space. In other words, the low-emissivity multilayer film 2 is preferably formed on the principal surface of the glass sheet 1 closer to the interior space.

The glass product of Modification 1 may be a laminated glass in which the glass sheet 10 with a low-emissivity multilayer film is attached to another glass sheet with an interlayer interposed therebetween. In this case, the structure of the glass product is for example the same as that of a glass product 200 of Modification 3 described later. This glass product is preferably used such that the low-emissivity multilayer film 2 is exposed to the interior space side. In other words, it is preferable that the glass sheet 10 with a low-emissivity multilayer film should be positioned closest to the interior space and the low-emissivity multilayer film 2 should be formed on the principal surface of the glass sheet 1 closer to the interior space.

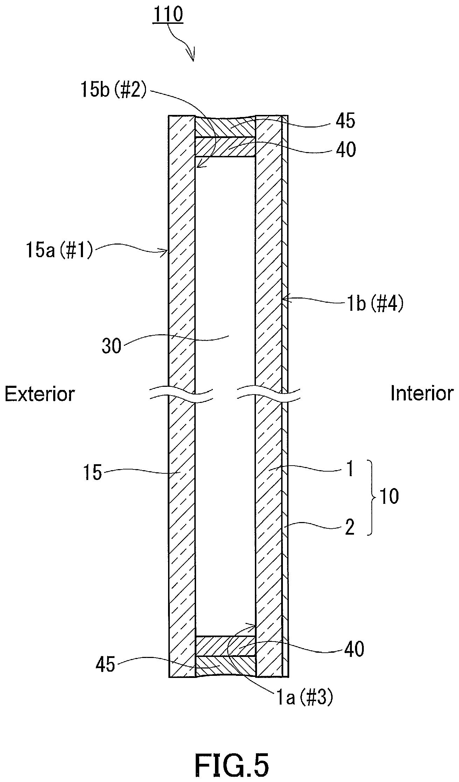

The glass product of Modification 1 may be a multiple-glazed glass unit in which the glass sheet 10 with a low-emissivity multilayer film is held facing another glass sheet across a gap layer. FIG. 5 shows a glass product 110 of Modification 1 that is a multiple-glazed glass unit. The glass product 110 includes the glass sheet 10 with a low-emissivity multilayer film and the second glass sheet 15 facing the glass sheet 10 with a low-emissivity multilayer film across the gap layer 30. In the glass product 110, the glass sheet 10 with a low-emissivity multilayer film is positioned closest to the interior space, and the low-emissivity multilayer film 2 is adjacent to the interior space. The second glass sheet 15 is positioned closest to the exterior space and is adjacent to the exterior space. The glass product 110 does not include the low-emissivity film 25 which is supported by the second glass sheet 15. Except for the above, the structure of the glass product 110 of the present embodiment is the same as that of the glass product 100. Accordingly, the elements common to the glass product 100 and the glass product 110 of the present embodiment are denoted by the same reference numerals, and the description thereof is omitted in some cases.

When the principal surfaces of the glass sheets included in the glass product 110 are numbered in order from the one facing the exterior space as the first face, the second face, the third face, ..., the glass product 110 shown in FIG. 5 is as follows. The principal surface 15a of the second glass sheet 15 facing away from the gap layer 30 (the principal surface closer to the exterior space) is the first face (face #1), the principal surface 15b of the second glass sheet 15 facing toward the gap layer 30 is the second face (face #2), the principal surface 1a of the first glass sheet 1 facing toward the gap layer 30 is the third face (face #3), and the principal surface 1b of the first glass sheet 1 facing away from the gap layer 30 (the principal surface closer to the interior space) is the fourth face (face #4). In the glass product 110, the low-emissivity multilayer film 2 is formed on the face #4.

In the glass product 110, the second glass sheet 15 can employ that described above for the first glass sheet 1, and may be the same as the first glass sheet 1.

In use of the glass product 110, the glass sheet 10 with a low-emissivity multilayer film is suitable for reflecting heat that is to be lost in the form of infrared rays from the interior space to the exterior space. That is, the glass product 110 is suitable for increasing the insulation performance against heat from the interior space to the exterior space.

<Modification 2 of glass product>

In Modification 2, the glass product is used as a door of a refrigerator or a freezer. Specifically, the glass product of Modification 2 is incorporated into the door structure of the refrigerator or freezer to separate an interior space and an exterior space.

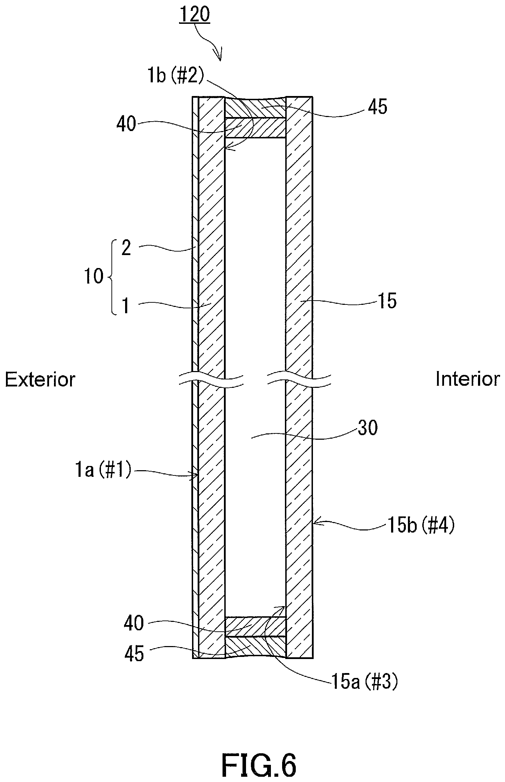

The glass product of Modification 2 is preferably the multiple-glazed glass unit in which the glass sheet 10 with a low-emissivity multilayer film is held facing another glass sheet across a gap layer. FIG. 6 shows a glass product 120 of Modification 2 that is a multiple-glazed glass unit. The glass product 120 includes the glass sheet 10 with a low-emissivity multilayer film and the second glass sheet 15 facing the glass sheet 10 with a low-emissivity multilayer film across the gap layer 30. In the glass product 120, the glass sheet 10 with a low-emissivity multilayer film is positioned closest to the exterior space, and the low-emissivity multilayer film 2 is adjacent to the exterior space. The second glass sheet 15 is positioned closest to the interior space and is adjacent to the interior space. Except for the above, the structure of the glass product 120 of the present embodiment is the same as that of the glass product 110.

When the principal surfaces of the glass sheets included in the glass product 120 are numbered in order from the one facing the exterior space as the first face, the second face, the third face, ..., the glass product 120 shown in FIG. 6 is as follows. The principal surface 1a of the first glass sheet 1 facing away from the gap layer 30 (the principal surface closer to the exterior space) is the first face (face #1), the principal surface 1b of the first glass sheet 1 facing toward the gap layer 30 is the second face (face #2), the principal surface 15a of the second glass sheet 15 facing toward the gap layer 30 is the third face (face #3), and the principal surface 15b of the second glass sheet 15 facing away from the gap layer 30 (the principal surface closer to the interior space) is the fourth face (face #4). In the glass product 120, the low-emissivity multilayer film 2 is formed on the face #1.

In the glass product 120, the second glass sheet 15 can employ that described above for the first glass sheet 1, and may be the same as the first glass sheet 1.

<Modification 3 of glass product>

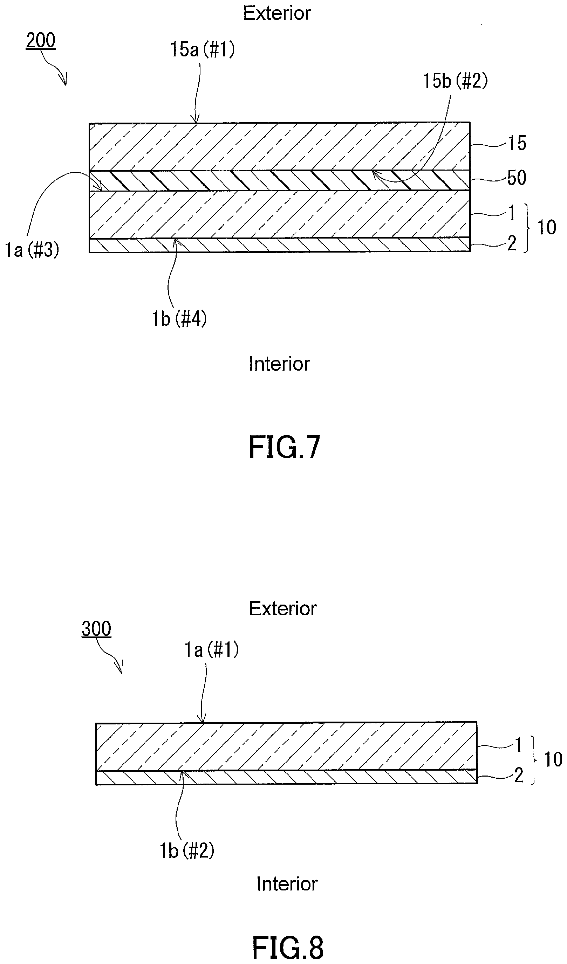

In Modification 3, the glass product is used as a skylight of a transportation vehicle. FIG. 7 shows the glass product 200 of Modification 3. Examples of the transportation vehicle include cars, airplanes, and vessels. Examples of the cars include railroad cars and automobiles. The transportation vehicle is typically an automobile. The glass product 200 includes the glass sheet 10 with a low-emissivity multilayer film, and for example further includes the second glass sheet 15. The glass product 200 may further include an interlayer 50 disposed between the first glass sheet 1 and the second glass sheet 15. The glass product 200 in FIG. 7 is a laminated glass.

The glass product 200 is incorporated into a window structure of the transportation vehicle to separate an interior space and an exterior space. The glass sheet 10 with a low-emissivity multilayer film is positioned closest to the interior space, and the low-emissivity multilayer film 2 is adjacent to the interior space. The second glass sheet 15 is positioned closest to the exterior space and is adjacent to the exterior space.

When the principal surfaces of the glass sheets included in the glass product 200 are numbered in order from the one facing the exterior space as the first face, the second face, the third face, ..., the glass product 200 shown in FIG. 7 is as follows. The principal surface of the second glass sheet 15 facing away from the interlayer 50 (the principal surface 15a closer to the exterior space) is the first face (face #1), the principal surface 15b of the second glass sheet 15 facing toward the interlayer 50 is the second face (face #2), the principal surface 1a of the first glass sheet 1 facing toward the interlayer 50 is the third face (face #3), and the principal surface 1b of the first glass sheet 1 facing away from the interlayer 50 (the principal surface closer to the interior space) is the fourth face (face #4). In the glass product 200, the low-emissivity multilayer film 2 is formed on the face #4.

In the glass product 200, the second glass sheet 15 can employ that described above for the first glass sheet 1, and may be the same as the first glass sheet 1.

The interlayer 50 can be a known interlayer. The interlayer 50 for example contains a polyvinyl acetal resin and a plasticizer. The polyvinyl acetal resin is not particularly limited, and is for example a polyvinyl butyral (PVB) resin. The plasticizer is not particularly limited, and is for example triethylene glycol di(2-ethylhexanoate), triethylene glycol di(2-ethylbutyrate), tetraethylene glycol di(2-ethylbutyrate), or tetraethylene glycol di(2-ethylhexanoate).

The glass product 200 may further include a low-emissivity film (not shown) that is supported by the second glass sheet 15 and is adjacent to the exterior space. The low-emissivity film can employ that described above for the low-emissivity multilayer film 2, and may be the same as the low-emissivity multilayer film 2.

In use of the glass product 200, the glass sheet 10 with a low-emissivity multilayer film is suitable for reflecting infrared light included in solar radiation from the exterior space side for heat shielding. That is, the glass product 200 is suitable for reducing a temperature increase of the interior space.

The glass product 200 may be used for a window structure other than a skylight of a transportation vehicle, and may be used for a window structure of a building.

<Modification 4 of glass product>

FIG. 8 is a schematic cross-sectional view of the glass product 300 of Modification 4. The glass product 300 has the same structure as the glass product 200 except that the glass product 300 does not include the second glass sheet 15 and the interlayer 50.

Similarly to the glass product 200, the glass product 300 is incorporated into a window structure of a transportation vehicle to separate an interior space and an exterior space. In the glass product 300, the principal surface 1a of the glass sheet 1 facing toward the exterior space is the first face (face #1), and the principal surface 1b of the glass sheet 1 facing toward the interior space is the second face (face #2). The low-emissivity multilayer film 2 is formed on the face #2.

In the glass product 300, the glass sheet 10 with a low-emissivity multilayer film may further include respective compressive stress layers (not shown) formed on the principal surfaces of the glass sheet 1. That is, in the glass sheet 1, the glass product 300 may be a strengthened glass sheet. The compressive stress layers can be formed by performing a strengthening treatment such as thermal tempering (thermal strengthening) on the glass sheet 1. Thermal tempering is a known treatment of heating a glass sheet, then blowing a gas onto surfaces of the glass sheet for quenching, and forming compressive stress layers on the surfaces, thereby increasing the strength of the glass sheet. The temperature for heating the glass sheet is typically equal to or higher than the strain point of a glass composition of the glass sheet and equal to or lower than the softening point of the composition.

Similarly to the glass product 200, the glass product 300 is suitable for reducing a temperature increase of the interior space. The glass product 300 may be used for a window structure other than a skylight of a transportation vehicle, and may be used for a window structure of a building.

<Embodiment of transportation vehicle>

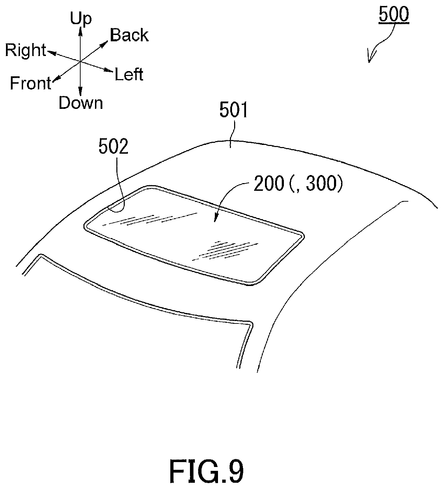

FIG. 9 shows an example of a transportation vehicle 500 including the glass product 200 (or 300) as a skylight. The transportation vehicle 500 in FIG. 9 is an automobile. In a roof 501 of the transportation vehicle 500, a sunroof opening 502 is formed which is substantially quadrangle and communicates the exterior (the outside of the automobile) and the interior (the inside of the automobile). In an edge portion of the sunroof opening 502, an opening and closing mechanism (not shown) is provided, and the glass product 200 is supported by this opening and closing mechanism. The opening and closing mechanism for example has guide rails, sliders, and an actuator. The guide rails are provided on the left and the right of the edge portion of the sunroof opening 502 and extend in a direction in which the transportation vehicle 500 goes forward. The sliders support the glass product 200, and can slide along the guide rails. The actuator can move the sliders along the guide rails. By moving the glass product 200 via the opening and closing mechanism, the sunroof opening 502 can be opened and closed. Specifically, the glass product 200 moves via the opening and closing mechanism between a closed position and an open position. In the closed position, the glass product 200 fits into the sunroof opening 502. In the open position, the glass product 200 is positioned closer to the exterior of the transportation vehicle 500 than the sunroof opening 502 is and behind the sunroof opening 502.

[EXAMPLES]

The present invention will be described below in more detail with reference to examples and comparative examples.

(Example 1)

[Glass sheet with transparent conductive layer]

First, a glass sheet with a transparent conductive layer (Low-E glass manufactured by Nippon Sheet Glass Co., Ltd.) was cut out so as to have a principal surface with a 10-cm side square shape, and then was washed. In this glass sheet with a transparent conductive layer, on one of principal surfaces of a float glass sheet having a thickness of 3 mm, an $SnO_2$ layer (first underlayer) having a physical thickness of 25 nm, an $SiO_2$ layer (second underlayer) having a physical thickness of 25 nm, and an $SnO_2$: F layer (transparent conductive layer) having a physical thickness of 340 nm were layered in this order.

[Preparation of coating liquid]

Next, 5.2 g of tetraethoxysilane (ethyl orthosilicate), 7.99 g of ethanol, 1.66 g of purified water, and 0.15 g of a nitric acid having a concentration of 1 N (1 mol/L) were mixed together. A resultant mixture was aged at 40°C for 8 hours to obtain 15 g of a liquid containing a hydrolysate of tetraethoxysilane. Next, 1.22 g of this liquid, 4.67 g of ethanol, and 0.11 g of zirconium oxynitrate dihydrate (trade name "Zircosol ZN", 25 wt% aqueous solution, manufactured by DAIICHI KIGENSO KAGAKU KOGYO CO., LTD.) were mixed together to obtain 6g of a coating liquid. The solids concentration in the coating liquid was 2.5 wt%.

[Application of coating liquid]

Next, the coating liquid was applied onto the glass sheet with a transparent conductive layer by spin coating. The spin coating was performed by the following method. First, the glass sheet with a transparent conductive layer was set in the center of a rotation table of a spin coater, and the glass sheet with a transparent conductive layer was rotated. The rotation speed stabilized at 1000 rpm, and then, of the prepared coating liquid, 1.5 g thereof was dropped onto a central portion of the glass sheet with a transparent conductive layer with a Komagome pipette. At this time, a surplus of the coating liquid spattered from a peripheral edge portion of the glass sheet with a transparent conductive layer. After no more spattering of the coating liquid was observed, the rotation of the glass sheet with a transparent conductive layer was stopped.

[Drying]

Next, a liquid film obtained by applying the coating liquid was dried. Drying of the liquid film was performed by transporting the glass sheet with a transparent conductive layer, on which the liquid film had been prepared, into a tunnel-type transport furnace. The set temperature inside the transport furnace was 300°C, and a heating zone of the transport furnace had a length of 1.6 m. The glass sheet with a transparent conductive layer was transported at a transport speed of 0.8 m/min, and was heated for 2 minutes.

[Baking]

Next, a resultant dry film was baked to form a $ZrO_2$-containing layer. Baking was performed by holding the glass sheet with a transparent conductive layer in an electric furnace set at 760°C for 4 minutes and 45 seconds. At this time, the maximum temperature the glass sheet with a transparent conductive layer reached was 650°C. Thus, a glass sheet with a low-emissivity multilayer film of Example 1 was obtained.

(Examples 2 to 7 and Comparative Examples 1 and 2)

Glass sheets with a low-emissivity multilayer film of Examples 2 to 7 and Comparative Examples 1 and 2 were obtained by the same method as in Example 1, except that the composition of the coating liquid was adjusted such that the content of $ZrO_2$ in the $ZrO_2$-containing layer and the solids concentration in the coating liquid had the values described in Table 1.

(Comparative Example 3)

A glass sheet with a low-emissivity multilayer film of Comparative Example 3 was obtained by the same method as in Example 1, except that no $ZrO_2$-containing layer was prepared. The glass sheet with a low-emissivity multilayer film of Comparative Example 3 had the same structure as that of the glass sheet with a transparent conductive layer used in Example 1.

(Evaluation of glass sheets with low-emissivity multilayer film)

Next, evaluation was performed by the following method with respect to the glass sheets with a low-emissivity multilayer film of Examples 1 to 7 and Comparative Examples 1 to 3.

[Physical thickness]

The physical thickness of the $ZrO_2$-containing layer was measured by the following method. First, the glass sheet with a low-emissivity multilayer film was cut and its cross section was observed with a scanning electron microscope (S-4700 manufactured by Hitachi High-Tech Corporation). From an electron microscope image obtained, the physical thickness of the $ZrO_2$-containing layer was determined.

[Optical properties]

The optical properties of the glass sheet with a low-emissivity multilayer film were evaluated by the following method. First, the spectral transmittance spectrum and the spectral reflectance spectrum of the glass sheet with a low-emissivity multilayer film were measured with a spectrophotometer (U-4100 manufactured by Hitachi, Ltd.). The spectral reflectance spectrum was measured by absolute reflectance measurement at a reflection angle of 5° using a face of the $ZrO_2$-containing layer (or the transparent conductive layer) as a measurement surface. From the obtained spectrum, the visible light transmittance and the visible light reflectance for a D65 light source specified in JIS R3106: 1998 were calculated. Furthermore, the $L_0^*$ value, the $a_0^*$ value, and the $b_0^*$ value of reflected light from the $ZrO_2$-containing layer were measured under the measurement conditions of the spectral reflectance spectrum. The $L_0^*$ value, the $a_0^*$ value, and the $b_0^*$ value are based on the $L^*a^*b^*$ color system (CIE1976).

[Surface antifouling properties]

The surface antifouling properties of the glass sheet with a low-emissivity multilayer film was evaluated by the following method. First, a rubber plate having a diameter of 15 mm was pressed against a gauze impregnated with oleic acid thus to adhere the oleic acid to the rubber plate. Next, the rubber plate was brought into close contact with the surface of the $ZrO_2$-containing layer (or the transparent conductive layer) at a pressure of 100 g/cm$^2$ for 10 seconds thus to adhere the oleic acid to the surface. Next, on this surface, a cotton cloth moistened with purified water was reciprocated at a pressure of 25 g/cm$^2$ 10 times thus to wipe off the oleic acid. Next, breath was blown on the surface and then visual check was performed as to whether there was any mark of the oleic acid. In the case where no mark of the oleic acid was observed, the surface antifouling properties were evaluated as excellent (∘). In the case where a mark of the oleic acid was observed, the surface antifouling properties were evaluated as poor (×).

[Scratch resistance]

The scratch resistance of the glass sheet with a low-emissivity multilayer film was evaluated by the following method. First, a side face of a 100-yen coin (an alloy of 75% copper and 25% nickel) was brought into contact with the surface of the $ZrO_2$-containing layer (or the transparent conductive layer) such that a surface of the coin was perpendicular to the surface of the $ZrO_2$-containing layer. Next, the coin was moved by 10 mm in a thickness direction of the coin while a load of 50 g was applied to the coin. The surface of the $ZrO_2$-containing layer was thus rubbed with the coin. In the case where no mark of the coin was visually observed on the surface of the $ZrO_2$-containing layer, the scratch resistance was evaluated as excellent (∘). In the case where a mark of the coin was visually observed but was unclear, the scratch resistance was evaluated as insufficient (△). In the case where a mark of the coin was visually observed clearly, the scratch resistance was evaluated as poor (×).

[Durability]

The durability (alkali resistance) of the glass sheet with a low-emissivity multilayer film was evaluated by the following method. First, the above-described durability test was performed on the glass sheet with a low-emissivity multilayer film. Next, the $L_1^*$ value, the $a_1^*$ value, and the $b_1^*$ value of reflected light from the $ZrO_2$-containing layer (or the transparent conductive layer) in the glass sheet with a low-emissivity multilayer film after the durability test were measured under the above-described measurement conditions of the spectral reflectance spectrum. The color change $\Delta E^*$ of the reflected light was calculated based on Equations (1) to (4) above with use of the obtained $L_1^*$ value, $a_1^*$ value, and $b_1^*$ value and the above-described $L_0^*$ value, $a_0^*$ value, and $b_0^*$ value.

[Arithmetic average roughness Ra of surface]

The arithmetic average roughness Ra of the surface of the $ZrO_2$-containing layer (or the transparent conductive layer) of the glass sheet with a low-emissivity multilayer film was evaluated by the following method. First, the surface shape of the $ZrO_2$-containing layer was measured with a scanning probe microscope (SPA-400 manufactured by SII Nano Technology Inc). Three straight lines intersecting each other in the field of view were selected, and the arithmetic average roughness was calculated for each of profile curves of these straight lines. The arithmetic average of the obtained values was determined as the arithmetic average roughness Ra of the surface of the $ZrO_2$-containing layer.

[Table 1]

| | | | Ex. 1 | Ex. 2 | Ex. 3 | Ex. 4 | Ex. 5 | Ex. 6 | Ex. 7 | Comp Ex. 1 | Comp Ex. 2 | Comp Ex. 3 |
|---|---|---|---|---|---|---|---|---|---|---|---|---|
| $ZrO_2$-containi ng layer | | $SiO_2$ (mol%) | 90 | 85 | 80 | 75 | 50 | 30 | 0 | 95 | 100 | - |
| | | $ZrO_2$ (mol%) | 10 | 15 | 20 | 25 | 50 | 70 | 100 | 5 | 0 | - |
| | | Coating liquid solids concentration (wt%) | 2.5 | 3.0 | 3.0 | 3.0 | 3.0 | 3.0 | 3.0 | 3.0 | 3.0 | - |
| | | Physical thickness (nm) | 48 | 57 | 54 | 87 | 74 | 64 | 49 | 97 | 100 | - |
| Optical properties | | Visible light transmittance (%) | 87.8 | 88.6 | 88.2 | 87.8 | 85.4 | 82.7 | 80.5 | 89.7 | 89.9 | 83.5 |
| | | Visible light reflectance (%) | 7.1 | 6.6 | 6.9 | 6.8 | 8.9 | 10.6 | 12.8 | 5.3 | 5.2 | 10.6 |
| | | Reflected light $L_0^*$ (D65) | 33.0 | 30.9 | 32.0 | 35.1 | 35.8 | 39.5 | 42.4 | 27.5 | 27.3 | 38.9 |
| | | Reflected light $a_0^*$ (D65) | 1.02 | 2.28 | 2.11 | 3.03 | 2.27 | 1.91 | 1.57 | 3.74 | 3.39 | -2.13 |
| | | Reflected light $b_0^*$ (D65) | 5.62 | 4.21 | 4.86 | -1.67 | 0.25 | 1.57 | -2.01 | -5.25 | -5.51 | -1.33 |
| Surface antifouling properties | | | ○ | ○ | ○ | ○ | ○ | ○ | ○ | ○ | ○ | ✕ |
| Scratch resistance | | | ○ | ○ | ○ | ○ | ○ | ○ | △ | ○ | ○ | ✕ |
| ΔE before and after durability test | | | 2.1 | 1.9 | 1.2 | 0.2 | 0.2 | 0.3 | 0.7 | 6.7 | 8.7 | - |
| Arithmetic average roughness Ra (nm) | | | 6.5 | 4.9 | 5.4 | 2.4 | 3.2 | 4.0 | 5.4 | 2.0 | 1.9 | 15.1 |

As can be seen from Table 1, the glass sheets with a low-emissivity multilayer film of Examples 1 to 7, in which the arithmetic average roughness Ra of the surface of the $ZrO_2$-containing layer is 12 nm or less and is smaller than the arithmetic average roughness Ra of the surface of the transparent conductive layer (15.1 nm: Comparative Example 3), were excellent in surface antifouling properties and scratch resistance. Furthermore, the results of Examples 1 to 7 and Comparative Examples 1 and 2 suggest a tendency that as the content of $ZrO_2$ in the $ZrO_2$-containing layer increases, the color change $\Delta E^*$ of the reflected light decreases and thus the durability (alkali resistance) improves. In Comparative Examples 1 and 2, the content of $ZrO_2$ in the $ZrO_2$-containing layer was low and the alkali resistance was not sufficient.

INDUSTRIAL APPLICABILITY

The glass sheet with a low-emissivity multilayer film of the present invention is suitable for glass products such as multiple-glazed glass units and laminated glasses.

**Claims**

1.   A glass sheet with a low-emissivity multilayer film comprising:

a glass sheet; and
a low-emissivity multilayer film supported by the glass sheet, wherein
the low-emissivity multilayer film has:

a $ZrO_2$-containing layer disposed on an outermost side of the low-emissivity multilayer film; and
a transparent conductive layer disposed between the glass sheet and the $ZrO_2$-containing layer,
a content of $ZrO_2$ in the $ZrO_2$-containing layer is 8 mol% or more and 100 mol% or less,
a content of $SiO_2$ in the $ZrO_2$-containing layer is 0 mol% or more and 92 mol% or less, and
an arithmetic average roughness Ra of a surface of the $ZrO_2$-containing layer is 12 nm or less, and is smaller than an arithmetic average roughness Ra of a surface of the transparent conductive layer.

2.   The glass sheet with a low-emissivity multilayer film according to claim 1, wherein
the arithmetic average roughness Ra of the surface of the transparent conductive layer is 14 nm or more.

3.   The glass sheet with a low-emissivity multilayer film according to claim 1 or 2, wherein
the transparent conductive layer consists substantially of fluorine-containing tin oxide.

4.   The glass sheet with a low-emissivity multilayer film according to claim 1 or 2, wherein
the transparent conductive layer is a layer consisting substantially of fluorine-containing tin oxide and having a thickness of 200 nm or more and 400 nm or less.

5.   The glass sheet with a low-emissivity multilayer film according to claim 1 or 2, wherein
the transparent conductive layer is a layer consisting substantially of fluorine-containing tin oxide and having a thickness of 400 nm or more and 800 nm or less.

6.   The glass sheet with a low-emissivity multilayer film according to claim 1 or 2, wherein
the transparent conductive layer includes:

a first transparent conductive layer consisting substantially of antimony-containing tin oxide and having a thickness of 100 nm or more and 300 nm or less; and
a second transparent conductive layer consisting substantially of fluorine-containing tin oxide and having a thickness of 150 nm or more and 400 nm or less.

7.   The glass sheet with a low-emissivity multilayer film according to any one of claims 1 to 6, wherein
the low-emissivity multilayer film further has an underlayer disposed between the glass sheet and the transparent conductive layer.

8.   The glass sheet with a low-emissivity multilayer film according to claim 7, wherein
the underlayer is a layer containing silicon oxycarbide as a main component and having a thickness of 20 nm or more and 120 nm or less.

9. The glass sheet with a low-emissivity multilayer film according to claim 7, wherein the underlayer includes:

a first underlayer consisting substantially of tin oxide and having a thickness of 10 nm or more and 90 nm or less; and
a second underlayer consisting substantially of $SiO_2$ and having a thickness of 10 nm or more and 90 nm or less.

10. The glass sheet with a low-emissivity multilayer film according to claim 7, wherein the underlayer includes:

a first underlayer consisting substantially of $SiO_2$ and having a thickness of 10 nm or more and 30 nm or less;
a second underlayer consisting substantially of tin oxide and having a thickness of 10 nm or more and 90 nm or less; and
a third underlayer consisting substantially of $SiO_2$ and having a thickness of 10 nm or more and 90 nm or less.

11. The glass sheet with a low-emissivity multilayer film according to any one of claims 1 to 10, wherein the $ZrO_2$-containing layer has a physical thickness of 15 nm or more and 150 nm or less.

12. The glass sheet with a low-emissivity multilayer film according to any one of claims 1 to 11, wherein the $ZrO_2$-containing layer has a physical thickness of 30 nm or more and 150 nm or less.

13. A glass product to be used as a skylight of a building to separate an interior space and an exterior space, the glass product comprising:

the glass sheet with a low-emissivity multilayer film according to any one of claims 1 to 12; and
a second glass sheet facing the glass sheet with a low-emissivity multilayer film across a gap layer, wherein
the low-emissivity multilayer film included in the glass sheet with a low-emissivity multilayer film is adjacent to the exterior space.

14. The glass product according to claim 13, further comprising
a low-emissivity film supported by the second glass sheet and being adjacent to the gap layer.

15. The glass product according to claim 14, wherein
the low-emissivity film has a layer containing Ag as a main component.

16. The glass product according to claim 15, wherein
the low-emissivity film has the two layers containing Ag as a main component.

17. A glass product to be used as a window of a building to separate an interior space and an exterior space, the glass product comprising:

the glass sheet with a low-emissivity multilayer film according to any one of claims 1 to 12; and
a second glass sheet facing the glass sheet with a low-emissivity multilayer film across a gap layer, wherein
the low-emissivity multilayer film included in the glass sheet with a low-emissivity multilayer film is adjacent to the interior space.

18. A glass product to be used as a door of a refrigerator or a freezer to separate an interior space and an exterior space, the glass product comprising:

the glass sheet with a low-emissivity multilayer film according to any one of claims 1 to 12; and
a second glass sheet facing the glass sheet with a low-emissivity multilayer film across a gap layer, wherein
the low-emissivity multilayer film included in the glass sheet with a low-emissivity multilayer film is adjacent to the exterior space.

19. A glass product to be used as a skylight of a transportation vehicle to separate an interior space and an exterior space, the glass product comprising

the glass sheet with a low-emissivity multilayer film according to any one of claims 1 to 12, wherein

the low-emissivity multilayer film included in the glass sheet with a low-emissivity multilayer film is adjacent to the interior space.

20. The glass product according to claim 19, further comprising a second glass sheet adjacent to the exterior space.

21. The glass product according to claim 19, wherein
the glass sheet with a low-emissivity multilayer film further has respective compressive stress layers formed on principal surfaces of the glass sheet.

10

FIG.1

FIG.2

Exterior

100

10

1a (#1)

45 40

1    2

40

1b (#2)

15a (#3)

30

15

25

45

15b (#4)

Interior

# FIG.3

FIG.4A

100

15a (#3)

10 {1 / 2}

1a (#1)

25

15

Exterior

Interior

Temperature

FIG.4B

110

15b (#2)

45

40

15a (#1)

1b (#4)

30

Exterior

Interior

15

1

10

2

40

45

1a (#3)

# FIG.5

FIG.6

Exterior

200

15a (#1)

15b (#2)

15

50

1a (#3)

1 ⎤
2 ⎦ 10

1b (#4)

Interior

FIG.7

Exterior

300

1a (#1)

1 ⎤
2 ⎦ 10

1b (#2)

Interior

FIG.8

FIG.9

## INTERNATIONAL SEARCH REPORT

| International application No. |
| --- |
| PCT/JP2020/034734 |

**A. CLASSIFICATION OF SUBJECT MATTER**
C03C 17/34(2006.01)i; B32B 17/06(2006.01)i; C03C 17/36(2006.01)i; C03C 27/06(2006.01)i; C03C 27/12(2006.01)i; E06B 3/663(2006.01)i; E06B 3/67(2006.01)i
FI:     C03C17/34 Z; B32B17/06; C03C17/36; C03C27/06 101H; C03C27/12 L; E06B3/663 H; E06B3/67 A
According to International Patent Classification (IPC) or to both national classification and IPC

**B. FIELDS SEARCHED**

Minimum documentation searched (classification system followed by classification symbols)
C03C17/00-17/44; C03C27/06

| Documentation searched other than minimum documentation to the extent that such documents are included in the fields searched |  |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2019/139008 A1 (NIPPON SHEET GLASS CO., LTD.) 18 July 2019 (2019-07-18) claims, paragraphs [0023], [0027]-[0035], [0053], [0087] | 1-21 |
| Y | JP 2018-127366 A (AGC INC.) 16 August 2018 (2018-08-16) paragraphs [0023]-[0029], [0086] | 1-21 |
| Y | JP 2015-504035 A (GUARDIAN INDUSTRIES CORP.) 05 February 2015 (2015-02-05) claims, paragraphs [0001], [0007], [0042]-[0054], drawings | 13-21 |
| Y | JP 2017-537046 A (PILKINGTON GROUP LIMITED) 14 December 2017 (2017-12-14) paragraphs [0007]-[0009], [0013]-[0016], [0030]-[0034], [0041]-[0045], [0051]-[0052], [0200]-[0220], drawings | 13-21 |

☐ Further documents are listed in the continuation of Box C.     ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 12 November 2020 (12.11.2020) | 24 November 2020 (24.11.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

# EP 4 032 867 A1

**INTERNATIONAL SEARCH REPORT**
Information on patent family members

International application No.

PCT/JP2020/034734

| Patent Documents referred in the Report | Publication Date | Patent Family | Publication Date |
|---|---|---|---|
| WO 2019/139008 A1 | 18 Jul. 2019 | (Family: none) | |
| JP 2018-127366 A | 16 Aug. 2018 | WO 2016/204003 A1 | |
| JP 2015-504035 A | 05 Feb. 2015 | WO 2013/096081 A1 claims, paragraphs [0002], [0008], [0048]-[0060], drawings KR 10-2014-0116424 A US 2011/0212279 A1 CN 104114510 A | |
| JP 2017-537046 A | 14 Dec. 2017 | WO 2016/063007 A1 specification, page 1, line 26 to page 2, line 18, page 2, line 31 to page 3, line 19, page 4, lines 19-28, page 5, lines 19-28, page 6, lines 15-20, page 19, line 17 to page 22, line 7, drawings CN 107074623 A US 2017/0253524 A1 | |

Form PCT/ISA/210 (patent family annex) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006098285 A

- JP 2014514997 A